# EUROPÄISCHE PATENTSCHRIFT

(11) **EP 0 547 353 B1**
(45) Veröffentlichungstag und Bekanntmachung des Hinweises auf die Patenterteilung: **27.12.1996**
(21) Anmeldenummer: 92118856.1
(22) Anmeldetag: 04.11.1992
(51) Int. Cl.: C10M 175/04, C22B 1/00, B03C 1/00, B03B 9/06

(54) **Verfahren und Vorrichtung zur Aufbereitung von Rückständen aus der Bearbeitung ferromagnetischer Werkstoffe**
Method and apparatus for treating wastes from metallworking of ferromagnetic materials
Méthode et dispositif pour le traitement des résidues obtenus lors du travail de matériaux ferromagnétiques

(30) Priorität: 18.12.1991 DE 4141676
(43) Veröffentlichungstag der Anmeldung: 23.06.1993
(73) Patentinhaber: FILTERWERK MANN & HUMMEL GMBH, D-71631 Ludwigsburg (DE)
(72) Erfinder: Heck, Alfred, B-4701 Eupen (BE)
(74) Vertreter: Voth, Gerhard, Dipl.-Ing.

(56) Entgegenhaltungen:
- EP-A- 0 024 041
- EP-A- 0 463 442
- DE-A- 3 621 836
- DE-A- 3 725 528
- FR-A- 2 286 676
- FR-A- 2 406 003
- GB-A- 2 219 526

## Beschreibung

Die Erfindung betrifft ein Verfahren zur Aufbereitung von Rückständen aus der Bearbeitung ferromagnetischer Verkstoffe, sowie eine Vorrichtung zur Durchführung dieses Verfahrens, gemäß den Ansprüchen 1 und 6.

Aus der DE-OS 37 39 496 ist eine Bandfiltereinrichtung bekannt, mit welcher verunreinigte Flüssigkeit, insbesondere Bearbeitungsflüssigkeit, welche bei der spanabhebenden Bearbeitung von Metallen verwendet wird, gereinigt werden kann. Eine solche Bandfiltereinrichtung ist mit einer Schmutzkammer versehen, welcher die Flüssigkeit zugeführt wird. Unterhalb dieser Schmutzkammer ist ein Filterboden angeordnet, auf dem sich ein Filtervlies befindet. Das Filtervlies wird schrittweise in Abhängigkeit von der abgelagerten Menge an Rückständen automatisch fortbewegt. Die Rückstände werden mit dem filtervlies aus der Einrichtung ausgetragen und gelangen in einen Auffangbehälter. Diese Rückstände enthalten neben einem großen Teil Metallspäne bzw. Metallstaub auch Schleifmittelrückstände, beispielsweise Korundmaterial. Außerdem sind diese Rückstände noch stark mit öl bzw. mit Emulsion behaftet.

Eine Entsorgung dieser Mischung ist ohne eine weitere Aufbereitung nur durch zugelassene Entsorgungsunternehmen und nur auf Sonderdeponien möglich. Es wurde zwar schon versucht diese Mischung einer Verbrennungsanlage zuzuführen. Aufgrund der Bestandteilen an Metallen sowie Korund stellt dies jedoch eine unwirtschaftliche und aufwendige Lösung dar. Ein Einschmelzen der Metalle in einem Schmelzofen ist wegen des hohen Fremdstoffanteils ebenfalls unzweckmäßig.

Gemäß der in der Bundesrepublik Deutschland maßgebenden "Technischen Anleitung Abfall" erhält die Abfallverwertung Vorrang vor der herkömmlichen Abfallbeseitigung. Diese Vorschrift gilt auch ausdrücklich für Sonderabfälle. Voraussetzungen für den den Verwertungsvorgang sind, daß die Verwertung technisch möglich ist, die Kosten der Verwertung zumutbar sind und für die gewonnenen Stoffe oder Energie ein Markt besteht oder geschaffen werden kann. Erst wenn diese Kriterien nicht erfüllt sind, sind die Abfälle ordnungsgemäß zu beseitigen.

Aus der DE-OS 37 25 528 ist eine Vorrichtung zum Pressen bzw. Entwässern von Suspensionen, Schlämmen oder dergleichen bekannt. Es hat sich jedoch gezeigt, daß auch selbst unter hohen Drücken eine Entfernung des an den Rückständen anhaftenden öls nicht möglich ist.

Die FR-A 2 286 676 beschreibt ein Verfahren zur Aufarbeitung von ölhaltigen Schleifrückständen, bei welchem die Rückstande einer mehrstufigen Waschbehandlung unterzogen werden, wobei jeder Wachstufe ein Siebvorgang nachgeschaltet ist, die gewaschenen Rückstände getrocknet und anschließend magnetisch getrennt werden.

Der Erfindung liegt deshalb die Aufgabe zugrunde, das bekannte Verfahren und die bekannte Vorrichtung weiter zu verbessern. Diese Aufgabe wird verfahrensgemäß durch Anspruch 1 gelöst. Eine Vorrichtung zur Durchführung des Verfahrens ist in Anspruch 12 beschrieben.

Wesentlicher Vorteil des dargestellten Verfahrens ist zum einen die Auftrennung der Rückstände in die ferromagnetischen Bestandteile und die weiteren Bestandteile wie z.B. Korund, und zum anderen die getrennte, nachfolgende Reinigung der separierten Bestandteile. Diese getrennte Reinigung hat den Vorteil, daß entsprechend dem Adhäsionsverhalten des öls an dem jeweiligen Bestandteil ein optimierter Waschvorgang durchgeführt damit eine günstige Reinigungswirkung erzielt wird. Da die Schleifrückstände im wesentlichen aus der Bearbeitung von Stahl- bzw. Stahlgußteilen wie z.B. Kurbelwellen, Nockenwellen, Pleuel bzw. Bremsscheiben entstehen, läßt sich eine Trennung dieser metallischen Schleifrückstände von den weiteren, in fester Form vorliegenden Rückständen durch eine magnetische Abscheidung bewerkstelligen.

Ein weiterer Vorteil des erfindungsgemäßen Verfahrens ist darin zu sehen, daß nach dem Lösen des öls bzw. der Emulsion an den Bestandteilen eine einfache Trennung der Bestandteile und der Waschlösung mittels getrennten Filtereinrichtungen erfolgt. Auch hier können die Filter bzw. das Filtermittel auf den jeweiligen auszufilternden Bestandteil eingestellt werden, so daß für jeden Bestandteil eine optimale Filterwirkung erzielt wird.

Gemäß einer vorteilhaften Weiterbildung der Erfindung ist vorgesehen, das Waschverfahren in kaskadenförmig angeordneten Behälter durchzuführen. Hierbei ist es zweckmäßig, für jeden der zu waschenden Bestandteile eine eigene Kaskade zu bilden, so daß jeder der Bestandteile mehreren Waschvorgängen unterzogen wird.

Weiterbildungsgemäß wird neue bzw. regenerierte Waschlösung dem in der Kaskade jeweils letzten Behälter zugeführt. Dadurch ist gewährleistet, daß die Reinigungswirkung der Waschlösung in den einzelnen Behältern immer konstant bleibt und das gesamte Verfahren kontinuierlich ablaufen kann.

In einer Weiterbildung der Erfindung ist der erste Behälter mit einem Tangentialeinlaufrohr ausgestattet. Dies hat den Vorteil, daß schon beim Einfüllen der Waschlösung in den Behälter bzw. beim Umwälzen des Behälterinhaltes eine definierte Flüssigkeitsströmung im Behälter erzielt wird.

Weiterbildungsgemäß kann eine Erzeugung eines magnetischen Feldes auch für den, dem ersten Behälter nachgeschalteten Behälter vorgesehen sein. Dies hat den Vorteil, daß nicht der gesamte Behälterinhalt in den nächsten Waschbehälter überführt werden muß, sondern die ferromagnetischen Bestandteile zunächst an den Innenwänden des Behälters angelagert werden. Die Waschflüssigkeit ist danach bis auf einen geringen Rest abzupumpen und dann mit der im nächsten Waschbehälter befindlichen Waschflüssigkeit die ferromagnetischen Bestandteile von den Behälterinnenwänden zu lösen und dem nächsten Waschbehälter zuzuführen.

Weiterbildungsgemäß ist ein Pufferbehälter für verbrauchte Waschlösung vorgesehen. Sollten sich in der, in den Pufferbehälter rückgeführte Waschlösung noch irgendwelche Bestandteile (ferromagnetische Bestandteile oder Korund) befinden, so setzen sich diese in der ruhenden Flüssigkeit ab und können über ein Austragventil in einen der Behälter rückgeführt werden.

Das Filter für die ferromagnetischen Bestandteile ist gemäß einer Weiterbildung ein Druckbandfilter, welches chargenweise diese Bestandteile austrägt.

Für die weiteren Bestandteile ist in vorteilhafter Weise ein Unterdruckfilter vorgesehen. Dies arbeitet kontinuierlich und hat den Vorteil, daß aufgrund dessen relativ großen Volumens sich ein weiterr Pufferbehälter für die Waschlösung erübrigt.

Die Bewegung des Behälterinhalts erfolgt zweckmäßigerweise mittels eines Rührwerks und/oder einer Umwälzpumpe. Der Einsatz der verschiedenen Vorrichtungen hängt davon ab, welche Bestandteile in dem entsprechenden Behälter enthalten sind und wie ein optimales Waschergebnis erzielt werden kann.

Es hat sich gezeigt, daß die Rückstände gern zu Verklumpungen neigen, zu diesem Zweck kann in einem oder mehreren der Umwälzleitungen ein Zerkleinerer vorgesehen sein. Dieser Zerkleinerer besteht vorteilhafterweise aus mehreren Messern bzw. Disolverscheiben, die auf einer Welle in axialer Richtung übereinander angeordnet sind. Diese Welle erstreckt sich in ein Rohr, durch welches der Behälterinhalt gepumpt wird und dreht sich beispielsweise mit einer Drehzahl von 3000/Min. Zur Verhinderung eines Verschleißes an den Rohrwänden im Bereich der Messer in in vorteilhafter Weise ein Verschleißblech an der Rohrwand angelegt.

Diese und weitere Merkmale von bevorzugten Weiterbildungen der Erfindung gehen außer aus den Ansprüchen auch aus der Beschreibung und in den Zeichnungen hervor. Wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Ausführungsbeispiele der Erfindung sind in den Zeichnungen dargestellt und werden im folgenden näher erläutert. Es zeigen:
- Fig. 1: eine schematische Darstellung der Vorrichtung zur Durchführung des Verfahrens zur Aufbereitung von Rückständen,
- Fig. 2: eine Variante der Vorrichtung zur Durchführung des Verfahrens zur Aufbereitung von Rückständen,
- Fig. 3: eine Einrichtung zum Zerkleinern von Rückständen.

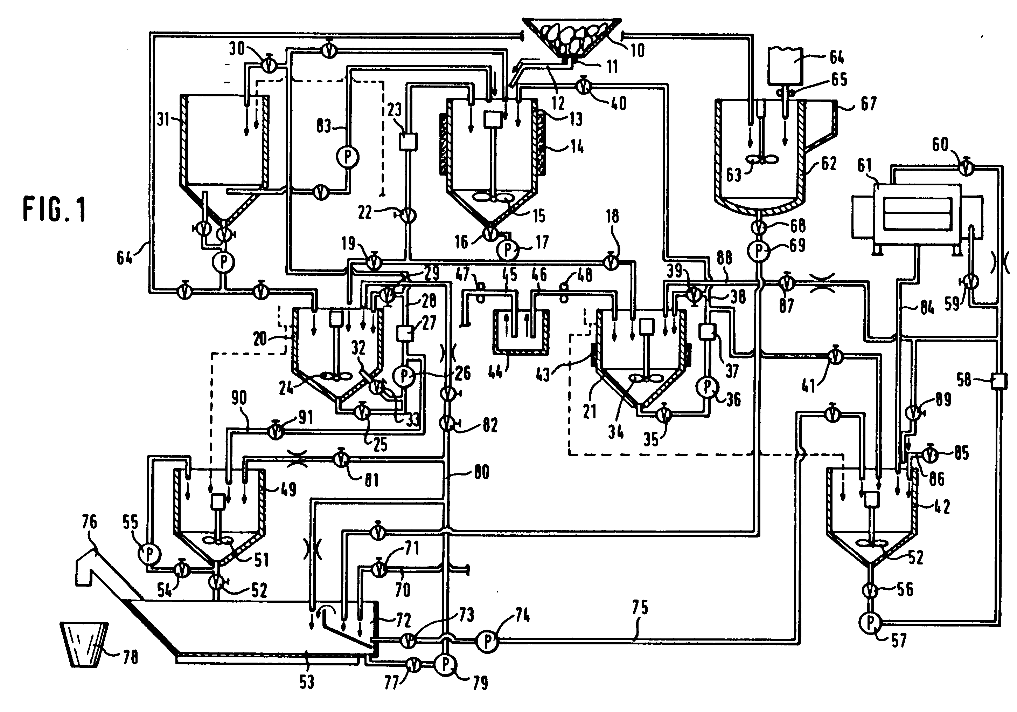

In Fig. 1 sind die Komponenten zur Durchführung des Verfahrens zur Aufbereitung von Rückständen aus der Bearbeitung ferromagnetischer Werkstoffe dargestellt. Es ist ein Behälter 10 zur Aufnahme des mit Wasser und öl behafteten Materials vorgesehen. An diesem Behälter befindet sich eine Dosiereinrichtung 11 sowie dieser nachgeordnet ein Förderrohr 12, welches zu einem Behälter 13 führt. Der Behälter 13 ist an seinem Umfang mit Magneten 14 versehen. Diese Magnete sich außerhalb des Behälters angeordnet und erzeugen im Behälter ein Magnetfeld. Die Magnete können von der Behälterwand abgehoben werden. Hierfür sind geeignete Schwenk-Vorrichtungen vorgesehen. Damit läßt sich das Magnetfeld im Inneren des Behälters schalten.

In dem Behälter 13 ist ferner ein Rührwerk 15 vorgesehen. Der Auslauftrichter des Behälters ist mit einem Ventil 16 verschließbar. Unterhalb des Ventils befindet sich eine Pumpe 17, deren Ausgang führt zu Ventilen 18, 19, über welche der Zulauf zu den Behältern 20, 21 gesteuert werden kann, sowie über ein Ventil 22 und ein Zerkleinerer 23 in den Einfüllbereich des Behälters 10.

In dem Behälter 20 ist ebenfalls ein Rührwerk 24 angeordnet. Der Behälter ist an seinem unteren Ende mit einem Auslauf versehen. An diesem Auslauf befindet sich ein Ventil 25. Dieses Ventil ist über eine Leitung mit einer Pumpe 26 und einem Zerkleinerer 27 verbunden. Die durch den Zerkleinerer führende Leitung 28 führt zum einen über ein Ventil 29 in den Einlaufbereich des Behälters, zum anderen über ein Ventil 30 in einen weiteren Behälter 31, welcher als Pufferbehälter für verbrauchte Waschflüssigkeit vorgesehen ist.

Im oberen Bereich des Auslaufs des Behälters 20 ist eine Entnahmestelle für Behälterflüssigkeit vorgesehen. Diese Entnahmestelle 32 ist mit einem Ventil 33 versehen. Der Behälter 21 weist ebenfalls ein Rührwerk 34 auf. An diesem Behälter befindet sich im unteren Auslaufbereich ein Ventil 35, diesem nachgeschaltet eine Pumpe 36 und ein Zerkleinerer 37, wobei die dem Zerkleinerer nachgeschaltete Leitung 38 über ein Ventil 39 zu dem Einlaufbereich dieses Behälters 21 führt, über ein Ventil 40 zu dem Einlaufbereich des Behälters 13 und über ein Ventil 41 zu dem Einlaufbereich des Behälters 42.

An dem Behälter 21 sind ebenfalls Permanentmagnete 43 angeordnet. Auch diese können von der Behälterwand entfernt werden, um ein Magnetfeld in dem Behälterinnenraum zu- und abzuschalten.

Ein Reinigungsmittelbehälter 44 ist vorgesehen zur Versorgung der Behälter 21 und 20 mit Reinigungsmittel. Dieses wird über Leitungen 45, 46 und Dosiereinrichtung 47, 48 den Behältern 20, 21 zugeführt.

Sowohl dem Behälter 20 als auch dem Behälter 21 ist jeweils ein weiterer Behälter nachgeschaltet (Behälter 49, Behälter 42). Auch diese beiden Behälter sind jeweils mit einem Rührwerk 51, 52 ausgestattet. Der Ausgang des Behälters 49 ist über ein Ventil 52 in ein Unterdruckbandfilter 53 geführt und ist außerdem über ein Ventil 54 und eine Pumpe 55 in den Behälter rückgeführt. Der Ausgang des Behälters 42 ist über ein Ventil 56, Pumpe 57, Zerkleinerer 58, Ventil 59 und Ventil 60 zu einem Druckbandfilter 61 geführt.

Es sind weiterhin noch folgende periphere Einrichtungen vorgesehen: Ein Behälter 62 mit einem Rührwerk 63, wobei diesem Behälter über die Leitung 64 verbrauchte Waschflüssigkeit zugeführt wird. Diese verbrauchte Waschflüssigkeit enthält öl- und Wasserbestandteile sowie Emulsion. Dem Behälter 62 kann über eine Dosiereinrichtung 65 aus einem Behälter 66 ein Spaltmittel zugeführt werden. Dieses Spaltmittel bewirkt ein Auftrennen der Emulsion. Das in dem Behälter abgesetzte öl wird in einen ölauffangbehälter 67 übergeleitet. Das sich im Bodenbereich des Behälters 62 absetzende Wasser gelangt über ein Ventil 68 und über eine Pumpe 69 in den Einströmbereich des Unterdruckbandfilters 53. In diesen Einströmbereich ist ferner eine Leitung 70 mit einem Ventil 71 geführt, durch welche Frischwasser dem Filter 53 zugeführt werden kann. Das in dem Einströmbereich 72 befindliche Frischwasser kann über ein Ventil 73 und eine Pumpe 74, sowie über die Leitung 75 dem Behälter 42 zugeführt werden. Die in dem Unterdruckbandfilter 53 ausgefilterten Schleifrückstände gelangen über den Austragehals 76 in einen Auffangbehälter 78. Die ausgefilterte Flüssigkeit wird im unteren Bereich des Behälters gesammelt und gelangt über das Ventil 77 und die Pumpe 79 sowie über die Rohrleitung 80 entweder über ein weiteres Ventil 81 zu dem Behälter 49 oder über ein weiteres Ventil 82 in den Behälter 20.
Es ist weiterhin noch eine Rückführleitung 83 zwischen Behälter 31 und Behälter 13 mit zwischengeschalteten Ventil sowie Pumpe vorgesehen. Eine Leitung 84 ist ferner zwischen dem Druckbandfilter 61 und dem Behälter 42 angeordnet. In den Behälter 42 führt weiterhin über ein Ventil 85 eine Leitung 86 zur Zuführung von Frischwasser.

Das Verfahren zum Aufbereiten von Schleifrückständen wird nachfolgend beschrieben:

Über die Dosiereinrichtung 11 gelangt eine bestimmte Menge an Schleifrückständen in den Behälter 13. Diesem Behälter wird ferner eine bestimmte Menge Waschlösung aus dem Pufferbehälter 31 zugeführt. Unter Umrühren mittels des Rührwerks 15 und Umpumpen des gesamten Inhalts mittels der Pumpe 17 über den Zerkleinerer 23 werden zum einen Verklumpungen der Bestandteile aufgelöst und zum anderen das an den Schleifrückständen haftende öl abgelöst.

Während dieser Reinigungphase wird noch kein Magnetfeld an den Behälterinnenwänden erzeugt. Erst nach Ablauf einer bestimmten Zeit werden die Magnete 14 an die Behälterwand herangeführt und somit ein Magnetfeld im Behälter 13 erzeugt das dazu führt, daß die ferromagnetischen Bestandteile im Bereich der Behälterinnenwand angelagert werden, so daß sich in der Waschlösung nur noch die weiteren Bestandteile, wie beispielsweise Korund und auch das öl bzw. die Emulsion befinden. Die Waschlösung sowie das darin befindliche Korund bzw. öl wird nun über das Ventil 16, die Pumpe 17 und das Ventil 19 dem Behälter 20 zugeführt. Auch in diesem Behälter erfolgt sowohl ein Umrühren der Flüssigkeit mittels des Rührwerks 24 als auch ein Umpumpen über Ventil 25, Pumpe 26, Zerkleinerer 27, Rohrleitung 28 und Ventil 29, so daß an dem Korund eventuell noch anhaftendes öl in dieser Waschstufe entfernt wird. Diesem Behälter wird ferner über die Dosiereinrichtung 47 und die Leitung 45 aus dem Behälter 49 Waschmittel (Tenside) zudosiert, um ein optimales Auswaschen des öls aus den Schleifrückständen zu gewährleisten. Während der Waschvorgang in Behälter 20 durchgeführt wird, wird im Behälter 13 das Magnetfeld durch Abheben der Magnete 14 aufgehoben und die in dem Behälter 21 befindliche Waschflüssigkeit dem Behälter 13 zugeführt. Mit dieser Waschflüssigkeit werden die ferromagnetischen Bestandteile aus dem Behälter 13 über das Ventil 16, die Pumpe 17 und das Ventil 18 dem Behälter 21 zugeführt. Auch in diesem Behälter erfolgt ein Umrühren mittels des Rührwerks 34 und ein Umpumpen über Ventil 35, Pumpe 36, Zerkleinerer 37 und Ventil 39. Diesem Behälter kann ebenfalls aus dem Behälter 49 Waschmittel zugeführt werden, so daß auch hier nochmals in einer weiteren Stufe eine Reinigung der ferromagnetischen Bestandteile erfolgt. Auch an diesem Behälter sind wiederum Magnete 43 vorgesehen, durch welche die ferromagnetischen Bestandteile an den Behälterinnenwänden angelagert werden. Die Waschlösung wird über Ventil 35, Pumpe 36, Leitung 38, Ventil 40, dem Behälter 13 wieder rückgeführt, in welchen eine neue Charge der zu reinigenden Rückstände eingeführt wird. Nach Abschalten der Magnete 43 an dem Behälter 21 wird mittels einer, aus dem Behälter 42 entnommenen Flüssigkeitsmenge über Ventil 56, Pumpe 57, Ventil 87, Leitung 88 die ferromagnetischen Bestandteile aus dem Behälter 21 ausgespült und über Ventil 35, Pumpe 36, Ventil 41 dem Behälter 42 zugeführt. Dort erfolgt in einer weiteren Reinigungsstufe unter Rühren mittels des Rührwerks 52 und unter einem Umwälzen des gesamten Behälterinhalts über Ventil 56, Pumpe 57, Zerkleinerer 58, Ventil 89 ein weiterer Waschvorgang, bevor der Behälterinhalt über die Austragleitung und das Ventil 60 dem Druckbandfilter zugeführt wird. Dort erfolgt ein Herausfiltern der festen Bestandteile, die Flüssigkeit kann über die Leitung 84 wieder dem Behälter 42 zugeleitet werden.

Zur Weiterbehandlung der in dem Behälter 20 befindlichen Bestandteile ist ein weiterer Waschbehälter 49 vorgesehen. Nach einer bestimmten Absetzzeit werden die im Auslauftrichter des Behälters 20 befindlichen festen Bestandteile über das Ventil 25, Pumpe 26 und Leitung 90 sowie Ventil 91 dem Behälter 49 zugeführt, in welchem sich Waschflüssigkeit befindet.

Auch in diesem Behälter erfolgt ein Durchmischen mittels des Rührwerks 51, so daß auch in dieser Waschphase noch Restmengen von öl an den Schleifmittelbestandteilen gelöst werden können. Nach einer Absetzzeit werden die in dem Auslauftrichter befindlichen Schleifmittelrückstände über das Ventil 52 in das Unterdruckbandfilter geleitet. Ein solches Unterdruckbandfilter ist beispielsweise aus der EP 0 024 041 bekannt und wird hier nicht näher erläutert.

Die ausgefilterten Bestandteile gelangen über den Austragehals 76 in einen Auffangbehälter 78. Diese Bestandteile sind frei von Emulsion oder öl und können problemlos entsorgt werden. Die ausgefilterte Flüssigkeit gelangt über das Ventil 77 und die Pumpe 79 entweder über Ventil 81 in den Behälter 49 oder über Ventil 82 in den Behälter 20. Auch die mittels des Druckbandfilters 61 ausgefilterten ferromagnetischen Bestandteile sind praktisch öl- bzw. emulsionsfrei und können problemlos recycled werden.

Während dem Behälter 13 Waschflüssigkeit aus dem Pufferbehälter 31 oder aus dem Behälter 20 bzw. 21 zugeführt wird, erfolgt die Regenerierung der Waschflüssigkeit in dem Behälter 42 über die Leitung 75 mittels Frischwasser oder aufbereiteter Waschflüssigkeit. Durch dieses System ist gewährleistet, daß die in den beiden Kaskaden in den letzten Behältern enthaltene Waschflüssigkeit einen hohen Reinheitsgrad besitzt, der durch die geregelte bzw. gesteuerte Zufuhr von frischer Lösung bzw. Frischwasser konstant gehalten werden kann.
Die Steuerung des gesamten Verfahrens erfolgt beispielsweise über eine einfache Zeitsteuerung oder über eine bekannte Prozeß-Steuerung.

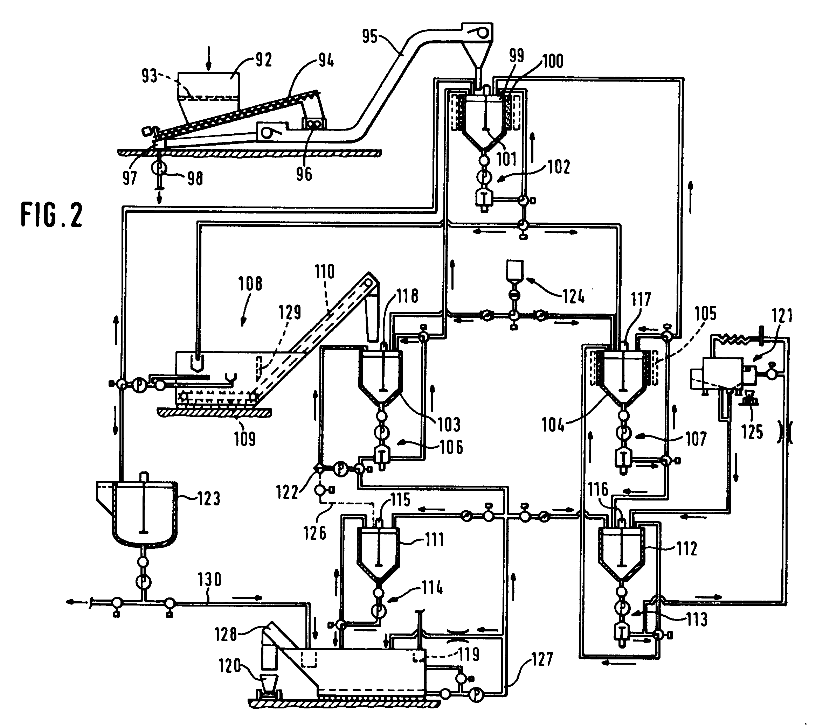

Die Variante gemäß Figur 2 zeigt in ihrem vorrichtungsgemäßen Aufbau eine Einschüttstelle 92 mit einem Rüttelsieb 93. In diese Einschüttstelle werden die Rückstände eingefüllt. Mit dem Rüttelsieb 93 werden grobe Verunreinigungen zurückgehalten. Die zugeführten Rückstände gelangen auf eine Dosierschnecke 94 und von dort auf ein Dosierfördergerät 95. Dieses Dosierfördergerät 95 kann beispielsweise ein Kratzbandfördergerät sein. Zwischen Dosierschnecke 94 und Dosierfördergerät 95 kann ein Feinzerkleinerer 96 angeordnet sein.

Sowohl die Dosierschnecke 94 als auch das Dosierfördergerät 95 sind leicht geneigt angeordnet, so daß eventuell stark beölte Rückstände abtropfen können. Das öl sammelt sich in einem Behälter 97 und kann mit einer Pumpe 98 abgeführt werden.

Das Dosierfördergerät 95 fördert eine bestimmte Menge der Rückstände in einen Trennbehälter 99. Dieser Behälter weist außerhalb seiner Außenwand Magnetelemente 100 auf, deren Magnetwirkung durch geeignete Mittel an- bzw. abgeschaltet werden. Sind die zugeführten Rückstände nicht ferromagnetisch, dann besteht auch die Möglichkeit, diesen Trennbehälter ohne Magnetelemente 100 auszuführen oder die Magnetwirkung abzuschalten. Die Rückstände werden in diesem Fall lediglich einer Wäsche zur Abtrennung des an den Rückständen anhaftenden öls bzw. der Emulsion unterzogen.

In dem Trennbehälter 99 ist ein Rührwerk 101 angeordnet. Am Auslauf des Trennbehälters 99 befindet sich ein Ventil, eine Pumpe, ein nachfolgend beschriebener Zerkleinerer sowie ein Umschaltventil (Fördereinheit 102). Es ist ferner ein zweiter Waschbehälter 103 sowie ein parallel zu diesem Waschbehälter angeordneter Waschbehälter 104 vorgesehen. Der Waschbehälter 104 ist ebenfalls mit Magnetelementen 105 ausgestattet. An beiden Behältern befindet sich am Auslauf jeweils eine Fördereinheit 106, 107.

Es ist ferner ein Kratzerbehälter 108 in das gesamte System integriert. Dieser Kratzerbehälter weist ein Kratzband 109 und ein Austrageband 110 auf.

Ebenfalls parallel angeordnet sind zwei sogenannte Spülbehälter 111, 112. Der Spülbehälter 112 ist an seinem Auslauf mit einer Fördereinheit 113 versehen. Der Spülbehälter 111 beinhaltet an seinem Auslauf eine Pumpeinheit 114, bestehend aus Ventil, Pumpe und Umschaltventil.

Die Waschbehälter 103, 104 sowie die Spülbehälter 111, 112 sind jeweils mit Rührwerk 115, 116, 117, 118 ausgestattet.

Unterhalb des Spülbehälters 111 befindet sind ein Unterdruckbandfilter 119. An dem Austragehals des Unterdruckbandfilters 119 ist ein Behälter 120 für das ausgefilterte Material vorgesehen.

Es ist ferner ein Druckbandfilter 121, ein Rückspülfilter 122 sowie ein Spaltbehälter 123 für die öl- Wasser-Emulsion und eine Dosiereinrichtung 124 für Tenside bzw. waschaktive Substanzen vorgesehen.

Der Funktionsablauf des gesamten Verfahrens wird nachfolgend beschrieben:

über die Einschüttstelle 92 gelangt eine bestimmte Menge an Rückständen auf den Rüttelsieb 93 und von dort über die Dosierschnecke 94 zu dem Dosierfördergerät 95. Das Dosierfördergerät 95 fördert eine definierte Menge in den Trennbehälter 99. In diesem Trennbehälter befindet sich Waschlauge. Die Waschlauge mit den Rückständen wird unter ständigen Rührbewegungen mittels des Rührwerks 101 in dem Behälter bewegt sowie ferner über die Fördereinheit 102 umgepumpt und mittels dem in der Fördereinheit 102 befindlichen Zerkleinerer Verklumpungen der Rückstände aufgetrennt.

Nach einer ausreichenden Waschzeit erfolgt eine Aktivierung der Magnetelemente 100. Dadurch gelangen die in dem Behälter befindlichen ferromagnetischen Teile an die Innenwand des Behälters. Die Waschlauge und die restlichen im Behälter schwebenden Bestandteile gelangen zu dem Kratzerbehälter 108. Aus dem Kratzerbehälter 108 können mittels des Kratzbandes 109 die festen Bestandteile, die sich am Boden des Behälters abgesetzt haben über das Austragband 110 dem Waschbehälter 103 zugeführt werden. Dort erfolgt ein weiteres Waschen der Bestandteile. Diese sind insbesondere Korund oder andere Schleifmittelbestandteile.

Neben der Rührbewegung mittels des Rührwerks 118 wird auch dieser Behälterinhalt über die Fördereinheit 106 mit dem darin enthaltenen Zerkleinerer umgepumpt, um eine gute Waschwirkung zu erzielen. Dem Behälter 103 werden je nach Erfordernis waschaktive Substanzen über die Dosiereinrichtung 124 zugeführt.

Nachdem der Trennbehälter 99 entleert ist, wird diesem Waschflüssigkeit aus dem Waschbehälter 104 zugeführt, die Magnetwirkung der Magnetelemente 100 aufgehoben und Waschflüssigkeit aus dem Waschbehälter 104 zugeführt. Nachdem die Magnetwirkung der Magnetelemente 100 aufgehoben ist, erfolgt mit der zugeführten Waschflüssigkeit ein Ausspülen der ferromagnetischen Rückstände aus diesem Behälter in den Waschbehälter 104. Dort erfolgt unter Rühren mittels des Rührwerks 117 eine weitere Reinigung und damit ein weiteres Lösen ölhaltiger Bearbeitungsflüssigkeit von den ferromagnetischen Bestandteilen. Auch hier wird über die Fördereinheit 107 ein Umwälzen des Behälterinhalts mit einer gleichzeitigen Zerkleinerung von Materialansammlungen vorgenommen. Mittels der Magnetelemente 105 werden nach einem ausreichenden Waschvorgang die ferromagnetischen Bestandteile an der Innenwand des Behälters angelagert sodaß die Waschflüssigkeit für einen neuen Übertragungszyklus für die im Trennbehälter 99 angesammelten ferromagnetischen Bestandteile in diesen Behälter 99 gepumpt werden kann. Die an der Behälterinnenwand angelagerten ferromagnetischen Bestandteile des Behälters 104 können mit einer im Spülbehälter 112 enthaltenen Spülflüssigkeit (Wasser) in diesen Spülbehälter 112 übergeleitet werden. In dem Spülbehälter kann durch die Fördereinheit 113 und das Rührwerk 116 ebenfalls noch einmal eine intensive Durchmischung der Bestandteile erfolgen. Der gesamte Inhalt des Spülbehälters 112 wird anschließend einem Druckbandfilter zugeführt. In diesem Druckbandfilter werden die festen Bestandteile (ferromagnetischen Bestandteile) aus der Flüssigkeit herausgefiltert. Diese festen Bestandteile gelangen in einen Behälter 125. Die ausgefilterten festen Bestandteile sind im wesentlichen ölfrei und können wieder als Rohstoffe verwendet werden.

Die in dem Waschbehälter 103 enthaltene Flüssigkeit mit den darin befindlichen Bestandteilen gelangt über die Fördereinheit 106 zu einem Rückspülfilter 122. In diesem Rückspülfilter 122 lagern sich die festen Bestandteile an. Der Rückspülfilter 122 ist mit einem Druckwächter zur Bestimmung des Durchflußwiderstandes ausgestattet, so daß rechtzeitig eine Rückspülung erfolgen kann. Bei der Rückspülung mit Spülflüssigkeit werden die in dem Filter angelagerten Rückstände über die Leitung 126 dem Spülbehälter 111 zugeführt. In diesem Spülbehälter befindet sich Spülflüssigkeit, die mit der Pumpeinheit 114 und dem Rührwerk 115 umgewälzt wird.

Nach einem ausreichenden Spülvorgang gelangt die Flüssigkeit in das Unterdruckbandfilter 119. Aus diesem Unterdruckbandfilter 119 wird gereinigte Flüssigkeit über die Leitung 127, dem Rückspülfilter 122 zugeführt und damit der Filter rückgespült.

Die in dem Druckbandfilter 121 ausgefilterten festen Bestandteile gelangen über den Austragehals 128 in einen Behälter 120. Die Rückstände sind im wesentlichen ölfrei.

In dem Kratzerbehälter 108 ist eine öltrennwand 129 angeordnet. Diese verhindert ein Mitschleppen des eventuell auf der Oberfläche der Flüssigkeit schwimmenden öls über das Austrageband 110 in den Behälter 103.

Verbrauchte Waschflüssigkeit wird aus dem Kratzerbehälter 108 in einen Spaltbehälter 123 geleitet. Diese kann mittels eines geeigneten Spaltmediums in die Bestandteile öl und Wasser aufgetrennt werden. Das ölfreie Wasser kann dem gesamten Kreislauf zugeführt werden, das heißt, über die Leitung 130 dem Druckbandfilter. Das an der Oberfläche des Spaltbehälter befindlichen öls kann abgesaugt und wieder aufbereitet werden.

Alternativ, oder zur Unterstützung der Aufspaltung von Materialverklumpungen sowie der Abspaltung von öl bzw. Emulsion von den Rückständen kann an einer oder mehreren Leitungen, durch welche die Rückstände mit der Flüssigkeit geführt wird, beispielsweise der Leitung im Bereich der Fördereinheit 102 oder der Leitung im Bereich der Fördereinheit 107 eine Einrichtung zur Erzeugung von Ultraschall angeordnet sein. Diese Einrichtung kann auch an einem der Behälter angeordnet sein.

Falls in dem zweiten Waschbehälter 103 eventuell noch ferromagnetische Bestandteile enthalten sind, besteht die Möglichkeit, auch in diesem Waschbehälter Magnete anzuordnen, so daß sich die ferromagnetischen Bestandteile an den Innenwänden des Waschbehälters anlagern und nach einer gewissen Zeit über eine Rückspülung in den Trennbehälter 99 ausgetragen werden.

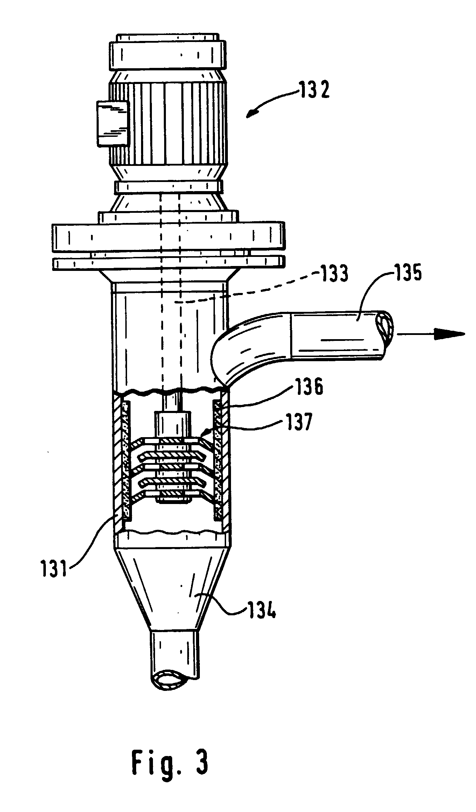

Die in den Fördereinheiten 102, 106, 113, 107 gezeigten Zerkleinerer sind in einer näheren Darstellung in Figur 3 gezeichnet. Diese Zerkleinerer bestehen aus einem Gehäuse 131, auf welches ein Motor 132 aufgesetzt ist. An der Welle 133 des Motors befinden sich mehrere sogenannte Disolverscheiben 137. Die Disolverscheiben 137 haben wie in der Figur 3 deutlich zu sehen, unterschiedliche Durchmesser und sind jeweils an ihrem äußeren Umfang mit leicht abgewinkelten Zahnelementen versehen. Die unterste Disolverscheibe besitzt in einem mittleren Durchmesserbereich zusätzlich Durchgangsbohrungen. Durch diese Durchgangsbohrungen strömt ein Teil der Flüssigkeit, während der andere Teil am äußeren Umfang der Disolverscheibe vorbeitströmt und durch die Zähne erfasst wird, so daß die in diesem Teil befindlichen Verklumpungen zerkleinert werden. Die Flüssigkeit, welche die Durchgangsbohrungen durchströmt, gelangt bei der nächsten und kleineren Disolverscheibe an deren Zahnelemente, so daß die in diesem Teilflüssigkeitsstrom enthaltenen Materialverklumpungen ebenfalls aufgetrennt werden. Dieser ersten Zerkleinerungsstufe folgt eine weitere, die ebenfalls wieder eine große und kleine Disolverscheibe aufweist. Den Abschluß bildet eine große Disolverscheibe.

Die Flüssigkeit mit den darin enthaltenen Bestandteilen durchströmt den Zerkleinerer von unten nach oben, das heißt, die Flüssigkeit wird am Rohrstutzen 134 zugeführt und verläßt den Zerkleinerer am Ausgangsrohr 135. Im Bereich des Disolvers ist das Gehäuse 131 mit einer verschleißfesten Auskleidung 136 versehen.

### Bezugszeichenliste

- 10: Behälter
- 11: Dosiereinrichtung
- 12: Förderrohr
- 13: Behälter
- 14: Magnet
- 15: Rührwerk
- 16: Ventil
- 17: Pumpe
- 18: Ventil
- 19: Ventil
- 20: Behälter
- 21: Behälter
- 22: Ventil
- 23: Zerkleinerer
- 24: Rührwerk
- 25: Ventil
- 26: Pumpe
- 27: Zerkleinerer
- 28: Leitung
- 29: Ventil
- 30: Venitl
- 31: Behälter
- 32: Entnahmestelle
- 33: Ventil
- 34: Rührwerk
- 35: Ventil
- 36: Pumpe
- 37: Zerkleinerer
- 38: Leitung
- 39: Ventil
- 40: Ventil
- 41: Ventil
- 42: Behälter
- 43: Magnete
- 44: Reinigungsmittelbehälter
- 45: Leitung
- 46: Leitung
- 47: Dosiereinrichtung
- 48: Dosiereinrichtung
- 49: Behälter
- 50: Rührwerk
- 51: Rührwerk
- 52: Ventil
- 53: Unterdruckbandfilter
- 54: Ventil
- 55: Pumpe
- 56: Ventil
- 57: Pumpe
- 58: Zerkleinerer
- 59: Ventil
- 60: Ventil
- 61: Druckbandfilter
- 62: Behälter
- 63: Rührwerk
- 64: Leitung
- 65: Dosiereinrichtung
- 66: Behälter
- 67: Ölauffangbehälter
- 68: Ventil
- 69: Pumpe
- 70: Leitung
- 71: Ventil
- 72: Einströmbereich
- 73: Ventil
- 74: Pumpe
- 75: Leitung
- 76: Austraghals
- 77: Ventil
- 78: Behälter
- 79: Pumpe
- 80: Leitung
- 81: Ventil
- 82: Ventil
- 83: Rückführleitung
- 84: Leitung
- 85: Ventil
- 86: Leitung
- 87: Ventil
- 88: Leitung
- 89: Ventil
- 90: Leitung
- 91: Ventil
- 92: Einschüttstelle
- 93: Rüttelsieb
- 94: Dosierschnecke
- 95: Dosierfördergerät
- 96: Feinzerkleinerer
- 97: Behälter
- 98: Pumpe
- 99: Trennbehälter
- 100: Magnetelement
- 101: Rührwerk
- 102: Fördereinheit
- 103: Waschbehälter
- 104: Waschbehälter
- 105: Magnetelemente
- 106: Fördereinheit
- 107: Fördereinheit
- 108: Kratzerbehälter
- 109: Kratzband
- 110: Austrageband
- 111: Spülbehälter
- 112: Spülbehälter
- 113: Fördereinheit
- 114: Pumpeinheit
- 115: Rührwerk
- 116: Rührwerk
- 117: Rührwerk
- 118: Rührwerk
- 119: Unterdruckbandfilter
- 120: Behälter
- 121: Druckbandfilter
- 122: Rückspülfilter
- 123: Spaltbehälter
- 124: Dosiereinrichtung
- 125: Behälter
- 126: Leitung
- 127: Leitung
- 128: Austragehals
- 129: Öltrennwand
- 130: Leitung
- 131: Gehäuse
- 132: Motor
- 133: Welle
- 134: Rohrstutzen
- 135: Ausgangsrohr
- 136: Auskleidung
- 137: Disolverscheiben

## Patentansprüche

1. Verfahren zur Aufbereitung von Rückständen aus der Bearbeitung ferromagnetischer Werkstoffe, insbesondere mit Wasser und öl behaftete Schleifrückstände,
- wobei ein erster Behälter vorgesehen ist welchem die Rückstände zugeführt werden und ferner in diesen Behälter eine Waschlösung zugegeben wird zum Lösen des an den Rückständen haftenden öls bzw. öl- Wasser-Emulsion
- wobei mittels eines im Behälter wirkenden magnetischen Feldes die ferromagnetischen Bestandteile der Rückstände von den weiteren Bestandteilen separiert werden
- wobei wenigstens ein weiterer Behälter vorgesehen ist in welchen die weiteren Bestandteile einem nachfolgenden Spülvorgang unterzogen werden und
- parallel dazu wenigstens ein weiterer Behälter vorgesehen ist, in welchem die ferromagnetischen Bestandteile einem nachfolgenden Spülvorgang unterzogen werden und
- die in den weiteren Behältern gereinigten Bestandteile jeweils nachgeschalteten Filtereinrichtungen zugeführt werden zum Ausfiltern dieser Bestandteile.

2. Verfahren nach Anspruch 1 dadurch gekennzeichnet, daß die weiteren Behälter jeweils kaskadenförmig angeordnet sind und die zu reinigenden Bestandteile nacheinander die Behälter durchlaufen.

3. Verfahren nach Anspruch 1 oder 2 dadurch gekennzeichnet, daß neue bzw. regenerierte Waschlösung den in der Kaskade jeweils letzten Behältern zugeführt wird.

4. Verfahren nach Anspruch 1, 2 oder 3 dadurch gekennzeichnet, daß der Flüssigkeitszulauf in den ersten Behälter über ein Tangentialeinlaufrohr erfolgt.

5. Verfahren nach einem der vorhergehenden Ansprüche dadurch gekennzeichnet, daß in einem, dem ersten Behälter nachgeschalteten Behälter für die ferromagnetischen Bestandteile ebenfalls ein Magnetfeld erzeugt wird.

6. Verfahren nach einem der vorhergehenden Ansprüche dadurch gekennzeichnet, daß ein Pufferbehälter für verbrauchte Waschlösung vorgesehen ist, wobei die darin sich eventuell absetzenden Bestandteile über ein Austragventil in einen der Behälter rückgeführt werden.

7. Verfahren nach einem der vorhergehenden Ansprüche, dadurch gekennzeichnet, daß das Filter für die ferromagnetischen Bestandteile ein Druckbandfilter ist.

8. Verfahren nach einem der vorhergehenden Ansprüche, dadurch gekennzeichnet, daß die weiteren Bestandteile mittels eines Unterdruckfilters ausgefiltert werden.

9. Verfahren nach einem der vorhergehenden Ansprüche, dadurch gekennzeichnet, daß der Behälterinhalt jeweils mittels einer Umwälzpumpe und/oder einem Rührwerk in Bewegung gehalten wird.

10. Verfahren nach Anspruch 9 dadurch gekennzeichnet, daß in einer Umwälzleitung ein Zerkleinerer zum Auftrennen von Verklumpungen der Schleifrückstände vorgesehen ist.

11. Verfahren nach Anspruch 10 dadurch gekennzeichnet, daß das Auftrennen von Verklumpungen mittels einer Messerwelle erfolgt, wobei diese Welle in axialer Richtung fliegend in einem Rohr mit vergrößertem Rohrquerschnitt angeordnet ist und mehrere axial nacheinander an der Welle befestigte Messer vorgesehen sind, und wobei an der Innenwand des Rohres im Bereich der Messer (Disolverscheibe), mittels wenigstens eines Verschleißbleches ein Abrieb oder eine Abnutzung an dem Rohr vermieden wird.

12. Verfahren, nach Anspruch 1, zur Aufbereitung von Rückständen aus der Bearbeitung von Werkstoffen insbesondere mit Emulsion oder öl behafteten Rückständen, wobei ein erster Behälter (99) vorgesehen ist, welchem die Rückstände zugeführt werden und ferner in diesen Behälter (99) eine Waschlösung zugegeben wird zum Lösen des an den Rückständen anhaftenden öls bzw. öl- Wasser-Emulsion, wobei wenigstens ein weiterer Behälter (103) vorgesehen ist, in welchem die Rückstände einem nachfolgenden Waschvorgang unterzogen werden und wobei die in den Behältern gereinigten Bestandteile jeweils nachgeschalteten Filtereinrichtungen (122) zugeführt werden, zum Ausfiltern dieser Bestandteile.

13. Vorrichtung zur Durchführung des Verfahrens nach Anspruch 1 mit einem ersten Behälter in welchen sowohl Schleifrückstände als auch eine Waschlösung zugegeben wird zum Lösen des an den Schleifrückständen haftenden öls bzw. OW-Emulsion mit Magnete, die im Außenbereich des Behälters angeordnet sind und im Behälter ein Magnetfeld erzeugen zur Separierung der Schleifrückstände von den weiteren Bestandteilen, mit einem weiteren Behälter zum Waschen der nicht ferromagnetischen Bestandteile, parallel dazu wenigstens einem weiteren Behälter, in welchem die ferromagnetischen Bestandteile einem nachfolgenden Waschvorgang unterzogen werden, wenigstens einer Filtereinrichtung, welcher die in den weiteren Behältern gereinigten Bestandteile zuführbar sind.

## Claims

1. Method of processing residues from the treatment of ferromagnetic materials, more especially grinding residues contaminated with water and oil,
- wherein a first container is provided, to which the residues are supplied, and a washing solution is also added to this container to dissolve the oil or oil-and-water emulsion adhering to the residues,
- wherein the ferromagnetic constituent ingredients of the residues are separated from the additional constituent ingredients by means of a magnetic field operating in the container,
- wherein at least one additional container is provided, in which the additional constituent ingredients are subjected to a subsequent rinsing process, and
- at least one additional container is provided parallel thereto, in which the ferromagnetic constituent ingredients are subjected to a subsequent rinsing process, and
- the constituent ingredients, which have been cleaned in the additional containers, are supplied to respectively added filtering means for filtering-out these constituent ingredients.

2. Method according to claim 1, characterised in that the additional containers are disposed in a cascade-like manner, and the constituent ingredients to be cleaned pass through the containers in succession.

3. Method according to claim 1 or 2, characterised in that new or regenerated washing solution is supplied to the last containers in the cascade.

4. Method according to claim 1, 2 or 3, characterised in that liquid is supplied to the first container via a tangential inlet pipe.

5. Method according to one of the preceding claims, characterised in that a magnetic field is also produced in a container, additional to the first container, for the ferromagnetic constituent ingredients.

6. Method according to one of the preceding claims, characterised in that a buffer container for used washing solution is provided, the constituent ingredients eventually settling therein and being returned to one of the containers via a discharge valve.

7. Method according to one of the preceding claims, characterised in that the filter for the ferromagnetic constituent ingredients is a pressure band filter.

8. Method according to one of the preceding claims, characterised in that the additional constituent ingredients are filtered-out by means of a vacuum filter.

9. Method according to one of the preceding claims, characterised in that the container content is kept in motion by means of a circulating pump and/or an agitator.

10. Method according to claim 9, characterised in that a comminuter is provided in a circulating conduit for breaking-up lumps of the grinding residues.

11. Method according to claim 10, characterised in that the lumps are broken-up by means of a cutter shaft, this shaft being disposed in a pipe, having an enlarged cross-section, so as to be detachable in the axial direction, and a plurality of cutters are provided, which are mounted axially on the shaft in succession, and wherein the pipe is prevented from becoming worn or abraded at the internal wall of the pipe in the region of the cutters (dissolver disc) by means of at least one metal wearing plate.

12. Method, according to claim 1, of processing residues from the treatment of materials, more especially residues contaminated with emulsion or oil, wherein a first container (99) is provided, to which the residues are supplied, and a washing solution is also added to this container (99) to dissolve the oil or oil-and-water emulsion adhering to the residues, wherein at least one additional container (103) is provided, in which the residues are subjected to a subsequent washing process, and wherein the constituent ingredients, which have been cleaned in the containers, are supplied to respectively added filtering means (122) for filtering-out these constituent ingredients.

13. Apparatus for accomplishing the method according to claim 1, having a first container, to which both grinding residues and a washing solution are added to dissolve the oil or o-and-w emulsion, which adheres to the grinding residues, by means of magnets which are disposed in the external region of the container and produce a magnetic field in the container for separating the grinding residues from the additional constituent ingredients, having an additional container for washing the non-ferromagnetic constituent ingredients, having at least one additional container parallel thereto, in which the ferromagnetic constituent ingredients are subjected to a subsequent washing process, and having at least one filtering means, to which the constituent ingredients, which have been cleaned in the additional containers, can be supplied.

## Revendications

1. Procédé de traitement de résidus provenant de l'usinage de matières ferromagnétiques, en particulier de résidus de meulage contenant de l'eau et de l'huile,
caractérisé en ce qu'
- on prévoit un premier récipient auquel sont amenés les résidus et dans lequel en outre on apporte une solution de lavage pour dissoudre l'huile ou l'émulsion d'huile et d'eau qui adhère aux résidus,
- au moyen d'un champ magnétique agissant dans le récipient, on sépare les composants ferromagnétiques des résidus des autres composants,
- il est prévu au moins un autre récipient dans lequel on soumet les autres composants à un processus ultérieur de rinçage et
- parallèlement à cela on prévoit au moins un autre récipient, dans lequel les composants ferromagnétiques sont soumis à un processus ultérieur de rinçage et
- l'on amène les composants nettoyés dans les autres récipients à des dispositifs de filtration montés en aval pour filtrer ces composants.

2. Procédé selon la revendication 1,
caractérisé en ce que
les autres récipients sont respectivement disposés en cascade et les composants à nettoyer parcourant les uns après les autres les récipients.

3. Procédé selon la revendication 1 ou 2,
caractérisé en ce que
l'on amène une solution de lavage nouvelle ou régénérée aux derniers récipients dans la cascade.

4. Procédé selon la revendication 2 ou 3,
caractérisé en ce que
l'arrivée du liquide dans le premier récipient a lieu par un tuyau d'entrée tangentiel.

5. Procédé selon l'une des revendications précédentes,
caractérisé en ce que
dans un récipient, monté en aval du premier récipient, pour les composants ferromagnétiques on produit également un champ magnétique.

6. Procédé selon l'une des revendications précédentes,
caractérisé en ce que
il est prévu un réservoir tampon pour la solution de lavage usée, les composants, qui se sont éventuellement déposés dedans, étant ramenés par une vanne d'extraction dans l'un des récipients.

7. Procédé selon l'une des revendications précédentes,
caractérisé en ce que
le filtre est un filtre à bande sous pression pour les composés ferromagnétiques.

8. Procédé selon l'une des revendications précédentes
caractérisé en ce que
les autres composants sont filtrés au moyen d'un filtre à dépression.

9. Procédé selon l'une des revendications précédentes,
caractérisé en ce que
le contenu du récipient est maintenu en mouvement au moyen respectivement d'une pompe de circulation et/ou d'un agitateur.

10. Procédé selon la revendication 9,
caractérisé en ce que
l'on prévoit dans une conduite de recirculation un déchiqueteur pour séparer les bouchons de résidus de meulage.

11. Procédé selon la revendication 10,
caractérisé en ce que
la séparation des bouchons a lieu au moyen d'un arbre porte-lames, cet arbre étant disposé dans le sens axial de façon flottante dans un tuyau ayant une section transversale agrandie et plusieurs couteaux fixés sur l'arbre axialement les uns derrière les autres étant prévus, et une érosion ou une usure sur le tuyau étant évitée sur la paroi intérieure du tuyau dans la zone des couteaux (disques Disolver), au moyen d'au moins une tôle d'usure.

12. Procédé, selon la revendication 1, de traitement de résidus provenant de l'usinage de matières, en particulier de résidus imprégnés d'une émulsion ou d'huile,
dans lequel on prévoit un premier récipient (99), auquel sont amenés les résidus et dans lequel en outre on envoie une solution de lavage pour dissoudre l'huile ou l'émulsion d'huile et d'eau qui adhère aux résidus, dans lequel il est prévu au moins un autre récipient (103), dans lequel on soumet les résidus à un processus ultérieur de lavage et dans lequel on amène les composants nettoyés dans les récipients respectivement à des dispositifs de filtration (122) montés en aval pour filtrer ces composants.

13. Dispositif pour la mise en oeuvre du procédé selon la revendication 1, avec un premier récipient dans lequel on amène aussi bien les résidus de meulage qu'une solution de lavage aussi pour dissoudre l'huile ou l'émulsion d'huile et d'eau qui adhère aux résidus de meulage, avec des aimants, qui sont disposés à l'extérieur du récipient et qui produisent un champ magnétique dans le récipient servant à séparer les résidus de meulage des autres composants, avec un autre récipient, qui sert à laver les composants non ferromagnétiques et parallèlement à cela avec au moins un autre récipient, dans lequel les composants ferromagnétiques sont soumis à un processus ultérieur de lavage, avec au moins un dispositif de filtration auquel on puisse amener les composants épurés dans les autres récipients.
